# NEUE EUROPÄISCHE PATENTSCHRIFT

(11) **EP 2 007 694 B2**
(45) Veröffentlichungstag und Bekanntmachung des Hinweises auf die Entscheidung über den Einspruch: **14.02.2024**
(45) Hinweis auf die Patenterteilung: 04.09.2013
(21) Anmeldenummer: 07724053.9
(22) Anmeldetag: 05.04.2007
(51) Int. Cl.: C03C 17/34, C03C 17/36

(54) **WITTERUNGSBESTÄNDIGES SCHICHTSYSTEM**
WEATHER-RESISTANT LAYER SYSTEM
SYSTÈME STRATIFIÉ RÉSISTANT AUX CONDITIONS MÉTÉOROLOGIQUES

(30) Priorität: 07.04.2006 DE 102006016512
(43) Veröffentlichungstag der Anmeldung: 31.12.2008
(73) Patentinhaber: INTERPANE Entwicklungs-und Beratungsgesellschaft mbH, 37697 Lauenförde (DE)
(72) Erfinder: GLÄSER, Hans, Joachim, 51643 Gummersbach (DE); WEIS, Hansjörg, 37671 Höxter (DE)
(74) Vertreter: Körfer, Thomas
(86) Internationale Anmeldenummer: PCT/EP2007/003112
(87) Internationale Veröffentlichungsnummer: WO 2007/115796

(56) Entgegenhaltungen:
- EP-A- 1 291 331
- EP-A- 1 623 657
- EP-A- 1 637 225
- WO-A-97/10185
- JP-A- 11 109 104
- US-A1- 2002 045 073

## Beschreibung

Die vorliegende Erfindung betrifft ein auf einem transparenten Substrat aufgebrachtes Schichtsystem zur Verhinderung von Außenbeschlag und Bewitterüngsbeschmutzung auf der Außenoberfläche von Verglasungen.

Die Auswirkungen der Bewitterung auf die Außenoberfläche von Verglasungen sind Korrosion, Bewitterungsverschmutzung und Tau- bzw. Reifbeschlag.

Bewitterungsverschmutzung kann heute mit einer photo-katalytischen TiO₂-Schicht auf der Außenoberfläche erheblich verringert werden, so dass die Reinigungsintervalle der Verglasungen wesentlich verlängert werden können. Dies ist deshalb möglich, weil die Schicht bei Bewitterung einen erheblich erhöhten Selbstreinigungseffekt zeigt. Grundlage dieses Effektes ist, dass zum einen aus der Außenatmosphäre auf der TiO₂-Schicht adsorbierte, die Oberfläche hydrophobierende und damit verschmutzungserhöhende Kohlenwasserstoffe schon bei geringer Bestrahlung mit UV-Licht zersetzt werden, wozu eine relativ schwache Sonneneinstrahlung bei Außenexposition genügt. Somit findet auf der Schichtoberfläche ein photokatalytischer Prozess statt; daher der Name "photokatalytische" TiO₂-Schicht

Zum Anderen wird gleichzeitig die Schichtoberfläche bei UV-Lichteinstrahlung so stark und vor allen Dingen langzeitbeständig wasserbenetzend, d. h. super-hydrophil, so dass sich das Regenwasser auf ihr spreitet. Hierdurch wird abgelagerter Bewitterungsschmutz unterwandert, von der Oberfläche gelöst und weggeschwemmt. Das Lösen von Schmutz von einer Oberfläche und das anschließende Wegschwemmen des gelösten Schmutzes - beides hier mit Wasser - ist ein Waschreinigungsprozess. Das langzeitig beständige Spreiten des Regenwassers auf dieser Schicht bewirkt darüber hinaus, dass Regentropfen auf der Oberfläche in senkrechter Durchsicht nicht mehr sichtbar sind; die so beschichteten Scheiben bleiben also auch bei Regen in hohem Maße großflächig klar durchsichtig.

Marktgängige Produkte mit photokatalytischer TiO₂-Schicht sind z. Z. das "Activ" der Firma Pilkington und das "Bioclean" der Firma SSG. Der Schichtaufbau ist hier eine Doppelschicht bestehend aus einer Blockerschicht, die unmittelbar auf die Glasoberfläche aufgebracht wird und die Diffusion von Natrium-Ionen aus dem Glas in die darüber aufgebrachte photokatalytische Schicht verhindern soll, wodurch der photokatalytische Effekt aufgehoben würde, weil die Natrium-Ionen elektrische Ladungsträger, die bei der UV-Einstrahlung in der TiO₂-Schicht gebildet werden und die den photokatalytischen Effekt an der Schichtoberfläche auslösen, vernichten würden.

Außenbeschlag, die andere Auswirkung der Bewitterung, ist eine Folge der Abstrahlung von Wärme von der Verglasungsaußenoberfläche insbesondere an den Himmel. Wenn dann nicht genügend Wärme vom Innenraum auf die Außenoberfläche nachfließt, wie das insbesondere bei den modernen Isoliergläsern mit U_{g}-Werten ≤ 1,5 W/m²K der Fall ist, kommt es zu einer Temperaturabsenkung der Außenoberfläche, die bei hinreichend hoher relativen Außenluftfeuchte wegen Unterschreitung des Taupunktes zu Außenbeschlag, d. h. Tau oder Reif führt.

Dies kann mit Schichten, die auf der Außenoberfläche der Verglasung angeordnet ein Emissionsvermögen εₐ ≤ 0,2 haben, die also die Wärmeabstrahlung weitestgehend unterdrücken, soweit unterbunden werden, dass Reifbeschlag nicht mehr auftreten kann und Taubeschlag für klimatische Verhältnisse, wie sie in Mittel- und Nordeuropa vorherrschen, nur noch ausnahmsweise auftritt. Marktgängig ist heute eine witterungsbeständige SnO₂:F-Schicht auf Floatglas mit einem Emissionsvermögen εₐ ~ 0,17; das K-Glass der Firma Pilkington. Testverglasungen haben gezeigt, dass mit diesem Glas als Außenscheibe und der Schicht zum Außenraum angeordnet alle derzeit marktgängigen Verglasung mit einem U_{g}-Wert von 0.5 bis 1,5 W/m²K reifbeschlagfrei und im mittel- und nordeuropäischen Klima auch in hohem Maße taubeschlagfrei gehalten werden können.

Einen positiven Nebeneffekt zeigen sowohl die photokatalytische TiO₂-Schicht als auch die SnO₂F-Schicht: Sie decken die Glasoberfläche ab und verhindern somit gleichzeitig die Korrosion der Verglasungsaußenoberfläche bei Bewitterung.

Die Patentanmeldung EP 1 254 870 A2 (Pilkington) beschreibt eine photokatalytisch aktive TiOx-Schicht auf einem Substrat. Es wird unter anderem eine Na-Diffusionssperrschicht, bevorzugt aus SiOx zwischen Substrat und TiOx, beschrieben.

Die Patentanmeldung WO 2004/034105 A1 (Glaverbel) beschreibt eine Licht reflektierende Schicht (z.B.: Cr) oder ein Licht reflektierendes Substrat und darüber eine photokatalytisch aktive Schicht, wie TiOx, und ggf. eine Zwischenschicht, wie SiOx, sowie ggf. eine dünne (max. 5nm, z.B. SiOx) Kratzschutzschicht. Das Gesamtsystem hat eine Reflexion von 40-75%. Die Funktion der Zwischenschicht wird ebenfalls als Na-Diffusionssperrschicht angegeben. Die Anwendung liegt bei Autorückspiegeln.

Das Patent DE 69611618 T2 (Saint Gobain) lehrt, einen Überzug auf ein Substrat aufzubringen, wobei in dem Überzug teilweise kristalline TiOx-Teilchen mit Hilfe eines mineralischen Bindemittels in Form eines amorphen oder teilweise kristallisierten Oxids oder Oxidgemischs enthalten sind. Es wird beschrieben, unter dem Überzug mindestens eine dünne Schicht, die eine antistatische, thermische oder optische Funktion hat oder als Barriere gegen die Wanderung von Substrat ausgehender Alkalimetalle dient, vorzusehen. Insbesondere lehrt das Patent in Beispiel 4, dass beispielsweise eine direkt benachbarte leitfähige Unterschicht aus SnO₂:F günstigen Einfluss auf die katalytische Wirkung der darüberliegenden TiOxhaltigen Schicht habe.

Es ist daher Aufgabe der vorliegenden Erfindung, eine Technologie zu entwickeln, mit der die Korrosion, Witterungsverschmutzung und Tau- bzw. Reifbeschlag auf der Außenoberfläche von Verglasungen verhindert werden kann.

Diese Aufgabe ist mit dem Schichtsystem gemäß Patentanspruch 1 und einem Verfahren zur Herstellung des Schichtsystems gelöst worden. Die Unteransprüche betreffen vorteilhafte Weiterbildungen.

Die vorliegende Erfindung betrifft ein auf einem transparenten Substrat aufgebrachtes Schichtsystem, das zumindest eine oder mehrere Blockerschichten enthält, die eingebettet sind zwischen einer TCO- schicht und einer Top-Schicht aus einer photokatalytischen Schicht. Erfindungsgemäß wird explizit eine Zwischenschicht zwischen der photokatalytisch aktiven Schicht und einer leitfähigen Schicht bzw. einem leitfähigen Teilschichtsystem benötigt.

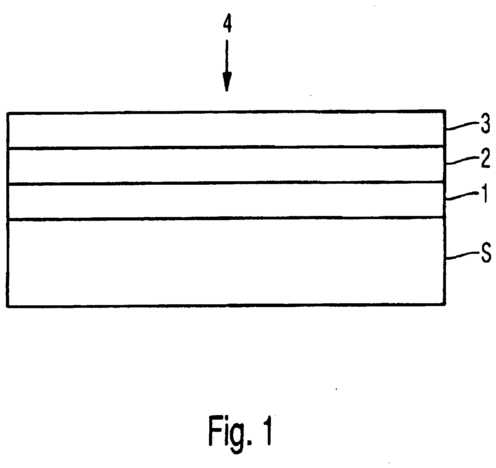

Die Fig. 1 zeigt als Beispiel einen Schichtaufbau der erfindungsgemäßen Kombinationsschicht.

Wie aus Fig. 1 ersichtlich ist, umfasst das Schichtsystem 4 mehrere Schichten, wobei zumindest eine oder mehrer Blockerschichten 2 vorgesehen sind. In einer Ausführungsform der vorliegenden Erfindung enthält das Schichtsystem 4 auf dem transparenten Substrat S angeordnet, eine Blockerschicht 2, die eingebettet ist zwischen einer TCO- schicht 1 und einer Top-Schicht aus einer photokatalytischen Schicht 3.

Erfindungsgemäß verhindert die Blockerschicht die Bildung der Raumladungszone. Die Blockerschicht zeichnet sich durch die folgenden Eigenschaften aus:
a) Sie besitzt eine geringere Elektronenaffinität (W_{vac}-E_{c}) als die direkt angrenzenden Materialien;
b) Sie weist einen größeren Bandabstand E_{g} zwischen Leitungs- und Valenzband auf als derjenige der photokatalytisch aktiven Schicht;
c) Sie weist eine geeignete Schichtdicke auf, um das Tunneln der Elektronen aus der TCO- in die photokatalytische Schicht weitgehend zu unterbinden und
d) sie weist eine vernachlässigbare Absorption durch Gitter- und Ionenbeschwingungen im Infrarotbereich auf.

Es wurden während der Entwicklung des Schichtsystems folgende Untersuchung vorgenommen.

Eine Kombinationsschicht mit einer niedrigemittierenden Grundschicht auf einer Flachglasscheibe, z. B. aus einem marktgängigen TCO (transparent conductive oxide) mit einem Flächenwiderstand R_{□} < 20 Ω, wurde mit einer darüber abgeschiedenen photokatalytischen, d. h. polykristallinen photokatalytischen Schicht mit vornehmlich Anatas-Struktur erzeugt. Es zeigte sich jedoch, dass bei der Kombination dieser beiden Schichten die photokatalytische Eigenschaft der polykristallinen Schicht verloren geht. Der gleiche Effekt zeigt sich auch, wenn die photokatalytische Schicht unmittelbar auf ein Metallblech aufgebracht wird. Die photokatalytische Wirkung zeigt die Schicht mit vornehmlich Anatas-Struktur offenbar nur, wenn sie auf einen Isolator, z. B. auf Flachglas aufgebracht wird.

Die Ursache dieses Phänomens ist darin zu sehen, dass die Schichtkombination aus einem TCO (oder auch einem Metall als Substrat) und der darüber liegenden photokatalytischen TiO₂-Schicht zu einem heterogenen pn-Übergang führt, d. h. die Elektronen aus der TCO-Schicht (oder der Metalloberfläche) diffundieren in die photokatalytische Schicht, wobei sie an der Grenzfläche TCO/photokatalytische Schicht zum TCO hin eine positiv geladene Raumladungszone hinterlassen, gebildet von den Dotier-Ionen des TCO (oder den Metallgitterionen). Bei UV-Lichteinstrahlung werden andererseits in der photokatalytischen Schicht Elektronen-Loch-Paare gebildet, die normalerweise gemeinsam zur Schichtoberfläche diffundieren und dort die photokatalytische Reaktion auf der Basis einer Redox-Reaktion auslösen. Durch die Raumladungszone werden jedoch die Elektronen dieses durch die UV-Einstrahlung gebildeten Ladungsträgerpaares abgesogen; sie fehlen also bei der Redox-Reaktion an der Oberfläche der photokatalytischen Schicht, so dass diese nicht mehr stattfinden kann.

Gemäß einer bevorzugten Ausführungsform der vorliegenden Erfindung ist die TCO-Schicht 1 aus SnO₂:F, In₂O₃:Sn, ZnO:Al oder ZnO:Sb sowie Mischungen daraus gebildet. Vorzugsweise weist die TCO-Schicht 1 eine Schichtdicke zwischen 100 nm und 1000 nm auf und bevorzugt sind Schichtdicken zwischen 150 nm und 800 nm, wobei insbesondere bevorzugt Schichtdicken zwischen 200 nm und 600 nm sind.

µm erfindungsgemäßen Schichtsystem ist die photokatalytisch aktive Schicht 3 aus TiOₓ gebildet, wobei x im Bereich zwischen 1,8 und 2,2 liegt. Es hat sich in der Praxis als günstig herausgestellt, wenn das TiOₓ zumindest teilweise kristallin als Rutil oder Anatas vorliegt. In einer bevorzugteren Ausführungsform der vorliegenden Erfindung, liegt das TiOₓ als Anatas vor.

Das erfindungsgemäße Schichtsystem weist eine photokatalytisch aktive Schicht 3 aus TiOₓ auf, die mit einem Element, das die Bandlücke des TiOₓ absenkt, dotiert ist. Beispiele für diese Elemente sind Fe, V, Nb, Cr, Al, Zn, Sn, Ce, Cu, Ta, Bi, Elemente aus der Gruppe der Lanthanoiden, Ni, Co, Mo und/oder W.

Es hat sich in der Praxis als vorteilhaft erwiesen, wenn die photokatalytisch aktive Schicht 3 eine Schichtdicke zwischen 2 nm und 150nm aufweist. Bevorzugt liegt die Schichtdicke zwischen 5 nm und 120 nm, besonders bevorzugt zwischen 10 nm und 80 nm.

Die Blockerschicht 2 im erfindungsgemäßen Schichtsystem 4 ist aus Oxiden von, Al, Hf, Nb, Ta, Mg, Zn, Y, Sn oder Mischungen daraus oder aus Nitriden und Oxinitriden von Al oder Si oder Mischungen daraus oder aus SiOxNyCz zusammengesetzt. In einer bevorzugteren Ausführungsform ist die Blockerschicht 2 aus Oxiden von , Nb, Zn, Al, und Mischungen daraus gebildet.

Die Blockerschicht 2 kann als einzelne Schicht vorliegen, wobei es je nach Verwendungszweck günstig sein kann, zwei bzw. mehrere dieser Blockerschichten vorzusehen.

Vorzugsweise weist die Blockerschicht 2 eine Dicke zwischen 5 und 300 nm auf, besonders bevorzugt zwischen 5 bis 50 nm.

Die Fig. 1 zeigt ein Beispiel für ein erfindungsgemäßes, auf einem transparenten Substrat aufgebrachtes Schichtsystem. Auf dem Substrat S befindet sich eine TCO-oder Metallschicht 1. Über dieser Schicht 1 ist die Blockerschicht 2 vorgesehen. Auf der Blockerschicht 2 befindet sich die Top-Schicht aus einer photokatalytischen Schicht 3.

Das erfindungsgemäße Schichtsystem weist eine Emissivität von bevorzugt kleiner als εₙ ≤ 0,50 auf. Bevorzugter ist die Emissivität des Schichtsystems kleiner als εₙ ≤ 0,20, insbesondere ist die Emissivität des Schichtsystems kleiner als εₙ ≤ 0, 15.

Das erfindungsgemäße Schichtsystem zeichnet sich durch eine hervorragende Lichttransmission aus, bevorzugt weist das Schichtsystem mit dem zugehörigen Substrat S eine Lichttransmission von mindestens 60% auf. Bevorzugter beträgt die Lichttransmission mindestens 70%, insbesondere beträgt sie 80%.

Im Prinzip kann im erfindungsgemäßen Schichtsystem jedes Substrat verwendet werden, solange gewährleistet ist, dass dieses hochtransparent ist. Bevorzugt besteht das Substrat S aus Glas oder einem transparenten Kunststoff. In der Regel liegen Glas bzw. Kunststoff in Form von Scheiben vor. Das Schichtsystem gemäß der vorliegenden Erfindung kann vorteilhafterweise derart ausgestaltet sein, dass es in Kombination mit mindestens einem weiteren transparenten Substrat und mindestens einem dazwischenliegenden Abstandhalter angeordnet ist, wobei das Schichtsystem nach außen weist.

In einer Ausführungsform der vorliegenden Erfindung ist das Schichtsystem 4 derart ausgestaltet, dass zwischen Substrat S und der TCO- schicht 1 mindestens eine Diffusionssperrschicht gegen Natrium aufgebracht ist, deren Dicke zwischen 5 nm und 150 nm liegt. Eine für die vorliegende Erfindung geeignete Na-Diffusionssperrschicht besteht aus SiOₓ oder SiN_{y}, wobei die Na-Diffusionssperrschicht aus SiOₓ oder SiN_{y} besteht, wobei 1, 7<x<2, 1 und 1, 1<y<1, 4 gilt.

Das erfindungsgemäße Schichtsystem kann nach herkömmlichen Verfahren durch Auftragen auf das Substrat hergestellt werden. Beispiele für die Herstellung des erfindungsgemäßen Schichtsystems sind ein CVD-Verfahren, das Sputtern und/oder die Mikrowellenbeschichtung. Welches Verfahren oder welche Kombination der Verfahren anzuwenden ist, liegt in der Bandbreite des Wissens des hier betreffenden Fachmanns.

Gegebenenfalls kann das Verfahren der Erfindung als CVD-Verfahren, das Plasma unterstützt ist, durchgeführt werden.

In einer Ausführungsform des erfindungsgemäßen Verfahrens wird das Schichtsystem hergestellt, indem mindestens eine der Schichten 1 oder 3 auf ein geheiztes Substrat S aufgebracht werden, dessen Temperatur bei der Abscheidung mindestens 100 °C und maximal 500°C beträgt, wobei eine Temperatur von mindestens 130°C bevorzugt ist und eine Temperatur von mindestens 170°C besonders bevorzugt ist.

In einer weiteren bevorzugten Ausführungsform des erfindungsgemäßen Verfahrens, wird die Schicht nach mindestens einem Depositionsschritt der Schichten 1 bis 3 einer Temperaturbehandlung unterzogen, die zwischen 200°C und 600°C in einem Zeitraum zwischen 3 Minuten und 330 Minuten liegt, wobei eine Temperaturbehandlung zwischen 250 °C und 350 °C in einem Zeitraum von 120 Minuten bis 270 Minuten bevorzugt ist.

Alternativ kann das Verfahren auch günstigerweise derart durchgeführt werden, dass die Schicht nach mindestens einem Depositionsschritt zur Abscheidung der Schichten 1 bis 3 einer Temperaturbehandlung unterzogen wird, die zwischen 600°C und 700°C in einem Zeitraum zwischen 2 Minuten und 10 Minuten vorgenommen wird, wobei eine Temperaturbehandlung zwischen 620°C und 650°C in einem Zeitraum von 2 bis 6 Minuten bevorzugt ist.

## Patentansprüche

1. Transparentes Substrat (S) mit aufgebrachtem Schichtsystem (4), das zumindest eine oder mehrere Blockerschichten (2) enthält, die die Bildung einer Raumladungszone verhindern und eingebettet sind zwischen einer TCO-Schicht (1) und einer Top-Schicht aus einer photokatalytischen Schicht (3), die aus TiOₓ besteht,
wobei x im Bereich zwischen 1,8 und 2,2 liegt, und mit einem Element, das die Bandlücke des TiOₓ absenkt, dotiert ist, das aus Fe, V, Nb, Cr, Al, Zn, Sn, Ce, Cu, Ta, Bi, Elementen aus der Gruppe der Lanthanoiden, Ni, Co, Mo und/oder W ausgewählt ist,
wobei die Blockerschicht (2) aus Oxiden von Al, Hf, Nb, Ta, Mg, Zn, Y, Sn oder Mischungen daraus oder aus Nitriden oder Oxinitriden von Al oder Si oder Mischungen daraus oder aus SiOₓN_{y}C_{z} zusammengesetzt ist.

2. Transparentes Substrat nach Anspruch 1,
**dadurch gekennzeichnet,**
**dass** die TCO-Schicht (1) aus SnO₂:F, In₂O₃:Sn, ZnO:Al oder ZnO:Sb sowie Mischungen daraus gebildet ist.

3. Transparentes Substrat nach Anspruch 2,
**dadurch gekennzeichnet,**
**dass** die TCO-Schicht (1) eine Schichtdicke zwischen 100 nm und 1000 nm aufweist, bevorzugt zwischen 150 nm und 800 nm und besonders bevorzugt zwischen 200 nm und 600 nm.

4. Transparentes Substrat nach Anspruch 1,
**dadurch gekennzeichnet,**
**dass** das TiOₓ zumindest teilweise kristallin als Rutil oder Anatas vorliegt.

5. Transparentes Substrat nach Anspruch 4,
**dadurch gekennzeichnet,**
**dass** das TiOₓ als Anatas vorliegt.

6. Transparentes Substrat nach mindestens einem der Ansprüche 1 bis 5,
**dadurch gekennzeichnet,**
**dass** die photokatalytisch aktive Schicht (3) eine Schichtdicke zwischen 2 nm und 150 nm aufweist, bevorzugt zwischen 5 nm und 120 nm und besonders bevorzugt zwischen 10 nm und 80 nm.

7. Transparentes Substrat nach einem der Ansprüche 1 bis 6,
**dadurch gekennzeichnet,**
**dass** die Blockerschicht (2) aus Oxiden von Nb, Zn, Al, und Mischungen daraus gebildet ist.

8. Transparentes Substrat nach mindestens einem der vorangegangenen Ansprüche,
**dadurch gekennzeichnet,**
**dass** die Blockerschicht (2) eine Dicke zwischen 5 und 300 nm, bevorzugt 5 bis 50 nm aufweist.

9. Transparentes Substrat nach mindestens einem der vorangegangenen Ansprüche,
**dadurch gekennzeichnet,**
**dass** die Emissivität des Schichtsystems kleiner als εₙ ≤ 0,50 ist.

10. Transparentes Substrat nach Anspruch 9,
**dadurch gekennzeichnet,**
**dass** die Emissivität des Schichtsystems kleiner als εₙ ≤ 0,20 ist.

11. Transparentes Substrat nach Anspruch 10,
**dadurch gekennzeichnet,**
**dass** die Emissivität des Schichtsystems kleiner als εₙ ≤ 0,15 ist.

12. Transparentes Substrat nach mindestens einem der vorangegangenen Ansprüche,
**dadurch gekennzeichnet,**
**dass** es eine Lichttransmission von mindestens 60% aufweist.

13. Transparentes Substrat nach Anspruch 12,
**dadurch gekennzeichnet,**
**dass** es eine Lichttransmission von mindestens 70% aufweist.

14. Transparentes Substrat nach Anspruch 13,
**dadurch gekennzeichnet,**
**dass** es eine Lichttransmission von mindestens 80% aufweist.

15. Transparentes Substrat nach mindestens einem der vorangegangenen Ansprüche,
**dadurch gekennzeichnet,**
**dass** das Substrat (S) aus Glas oder einem transparenten Kunststoff besteht.

16. Transparentes Substrat nach mindestens einem der vorangegangenen Ansprüche,
**dadurch gekennzeichnet,**
**dass** zwischen Substrat (S) und TCO-Schicht (1) mindestens eine Diffusionssperrschicht gegen Natrium aufgebracht ist, deren Dicke zwischen 5 nm und 150 nm liegt.

17. Transparentes Substrat nach Anspruch 16,
**dadurch gekennzeichnet,**
**dass** die Na-Diffusionssperrschicht aus SiOₓ oder SiN_{y} besteht, wobei 1,7<x<2,1 und 1,1<y<1,4 gilt.

18. Transparentes Substrat (4) nach mindestens einem der vorangegangenen Ansprüche in Kombination mit mindestens einem weiteren transparenten Substrat und mindestens einem dazwischenliegenden Abstandhalter, wobei das Schichtsystem nach außen weist.

19. Verfahren zur Herstellung eines Substrats mit einem Schichtsystem nach mindestens einem der Ansprüche 1 bis 18 durch ein CVD-Verfahren, Sputtern und/oder Mikrowellenbeschichtung.

20. Verfahren nach Anspruch 19,
**dadurch gekennzeichnet,**
**dass** das CVD-Verfahren Plasma unterstützt durchgeführt wird.

21. Verfahren nach mindestens einem der Ansprüche 19 oder 20,
**dadurch gekennzeichnet,**
**dass** die mindestens eine der Schichten (1) oder (3) auf ein beheiztes Substrat (S) aufgebracht wird, dessen Temperatur bei der Abscheidung mindestens 100°C und maximal 500°C beträgt, bevorzugt mindestens 130°C beträgt und besonders bevorzugt mindesten 170°C beträgt.

22. Verfahren nach mindestens einem der Ansprüche 20 oder 21,
**dadurch gekennzeichnet,**
**dass** das Schichtsystem nach mindestens einem Depositionsschritt der Schichten (1) bis (3) einer Temperaturbehandlung unterzogen wird, die zwischen 200°C und 600°C vorgenommen wird und zwischen 3 Minuten und 330 Minuten beträgt, bevorzugt zwischen 250°C und 350°C zwischen 120 Minuten und 270 Minuten.

23. Verfahren nach einem der Ansprüche 20 oder 21,
**dadurch gekennzeichnet,**
**dass** das Schichtsystem nach mindestens einem Depositionsschritt zur Abscheidung der Schichten (1) bis (3) einer Temperaturbehandlung unterzogen wird, die zwischen 600°C und 700°C vorgenommen wird und zwischen 2 Minuten und 10 Minuten beträgt, bevorzugt zwischen 620°C und 650°C zwischen 2 und 6 Minuten.

## Claims

1. A transparent substrate (S) with a layer system (4) applied thereto, which layer system (4) contains at least one or more blocker layers (2), which prevent the formation of a depletion zone, and which are embedded between a TCO layer (1) and a top layer comprising a photocatalytic layer (3) which consists of TiOₓ, wherein x is in the range between 1.8 and 2.2, and is doped with an element which lowers the bandgap of TiOₓ, and which is selected from Fe, V, Nb, Cr, Al, Zn, Sn, Ce, Cu, Ta, Bi, elements from the group of lanthanoids, Ni, Co, Mo and/or W, wherein the blocker layer (2) is composed of oxides of Al, Hf, Nb, Ta, Mg, Zn, Y, Sn or mixtures thereof or of nitrides or oxynitrides of Al or Si or mixtures thereof or of SiOₓN_{y}C_{z}.

2. A transparent substrate according to claim 1,
**characterised in that**
the TCO layer (1) is formed of SnO₂:F, In₂O₃:Sn, ZnO:Al or ZnO:Sb and mixtures thereof.

3. A transparent substrate according to claim 2,
**characterised in that**
the TCO layer (1) has a layer thickness of between 100 nm and 1000 nm, preferably between 150 nm and 800 nm and particularly preferably between 200 nm and 600 nm.

4. A transparent substrate according claim 1,
**characterised in that**
the TiOₓ is present at least partially in crystalline form as rutile or anatase.

5. A transparent substrate according to claim 4,
**characterised in that**
the TiOₓ is present as anatase.

6. A transparent substrate according to at least one of claims 1 to 5,
**characterised in that**
the photocatalytically active layer (3) has a layer thickness of between 2 nm and 150 nm, preferably between 5 nm and 120 nm and particularly preferably between 10 nm and 80 nm.

7. A transparent substrate according to one of claims 1 to 6,
**characterised in that**
the blocker layer (2) is formed of oxides of Nb, Zn, Al and mixtures thereof.

8. A transparent substrate according to at least one of the preceding claims,
**characterised in that**
the blocker layer (2) has a thickness of between 5 and 300 nm, preferably of 5 to 50 nm.

9. A transparent substrate according to at least one of the preceding claims,
**characterised in that**
the emissivity of the layer system is less than εₙ ≤ 0.50.

10. A transparent substrate according to claim 9,
**characterised in that**
the emissivity of the layer system is less than εₙ ≤ 0.20.

11. A transparent substrate according to claim 10,
**characterised in that**
the emissivity of the layer system is less than εₙ ≤ 0.15.

12. A transparent substrate according to at least one of the preceding claims,
**characterised in that**
it has a transmittance of at least 60%.

13. A transparent substrate according to claim 12,
**characterised in that**
it has a transmittance of at least 70%.

14. A transparent substrate according to claim 13,
**characterised in that**
it has a transmittance of at least 80%.

15. A transparent substrate according to at least one of the preceding claims,
**characterised in that**
the substrate (S) consists of glass or a transparent plastic.

16. A transparent substrate according to at least one of the preceding claims,
**characterised in that**
at least one diffusion barrier layer acting as a barrier against sodium diffusion is applied between substrate (S) and TCO layer (1), the thickness of which diffusion barrier layer is between 5 nm and 150 nm.

17. A transparent substrate according to claim 16,
**characterised in that**
the Na diffusion barrier layer consists of SiOₓ or SiN_{y}, wherein 1.7<x<2.1 and 1.1<y<1.4 applies.

18. A transparent substrate (4) according to at least one of the preceding claims in combination with at least one further transparent substrate and at least one spacer disposed therebetween, wherein the layer system faces the outside.

19. A method of producing a layer system having a layer system according to at least one of claims 1 to 18 using a CVD method, sputtering and/or microwave coating.

20. A method according to claim 19,
**characterised in that**
the CVD method is performed with plasma assistance.

21. A method according to at least one of claims 19 or 20,
**characterised in that**
at least one of the layers (1) or (3) is applied to a heated substrate (S), whose temperature on deposition amounts to at least 100°C and at most 500°C, preferably amounts to at least 130°C and particularly preferably amounts to at least 170°C.

22. A method according to at least one of claims 20 or 21,
**characterised in that,**
after at least one deposition step for layers (1) to (3), the layer system is subjected to heat treatment, which is performed at between 200°C and 600°C and lasts for between 3 minutes and 330 minutes, preferably between 250°C and 350°C and between 120 minutes and 270 minutes.

23. A method according to one of claims 20 or 21,
**characterised in that,**
after at least one deposition step for the deposition of layers (1) to (3), the layer system is subjected to heat treatment, which is performed at between 600°C and 700°C and lasts for between 2 minutes and 10 minutes, preferably between 620°C and 650°C and between 2 and 6 minutes.

## Revendications

1. Substrat transparent (S) avec un système de revêtement appliqué (4), lequel contient au moins une ou plusieurs couches de blocage (2), lesquelles empêchent la formation d'une zone de déplétion, et lesquelles sont insérées entre une couche TCO (1) et une couche Top constituée d'une couche photocatalytique (3), laquelle est constituée de TiOₓ, où x se trouve dans un domaine de 1,8 à 2,2, et est dopée avec un élément qui abaisse la bande interdite de TiOₓ, et qui est choisi parmi Fe, V, Nb, Cr, Al, Zn, Sn, Ce, Cu, Ta, Bi, des éléments du groupe des lanthanoïdes, Ni, Co, Mo et/ou W,
dans lequel la couche de blocage (2) est constituée d'oxydes de Al, Hf, Nb, Ta, Mg, Zn, Y, Sn ou de mélanges de ceux-ci ou de nitrures ou d'oxynitrures d'Al ou de Si ou de mélanges de ceux-ci ou de SiOₓN_{y}C_{z}.

2. Substrat transparent selon la revendication 1, **caractérisé en ce que** la couche TCO (1) est constituée de SnO₂:F, In₂O₃:Sn, ZnO:Al ou ZnO:Sb ainsi que de mélanges de ceux-ci.

3. Substrat transparent selon la revendication 2, **caractérisé en ce que** la couche TCO (1) présente une épaisseur de couche de 100 nm à 1 000 nm, de préférence de 150 nm à 800 nm et encore mieux de 200 nm à 600 nm.

4. Substrat transparent selon la revendication 1, **caractérisé en ce que** TiOₓ est présent au moins partiellement sous forme cristalline comme rutile ou anatase.

5. Substrat transparent selon la revendication 4, **caractérisé en ce que** TiOₓ est présent sous forme anatase.

6. Substrat transparent selon au moins l'une quelconque des revendications 1 à 5, **caractérisé en ce que** la couche photocatalytiquement active (3) présente une épaisseur de couche de 2 nm à 150 nm, de préférence de 5 nm à 120 nm et encore mieux de 10 nm à 80 nm.

7. Substrat transparent selon l'une quelconque des revendications 1 à 6, **caractérisé en ce que** la couche de blocage (2) est constituée d'oxydes de Nb, Zn, Al et de mélanges de ceux-ci.

8. Substrat transparent selon au moins l'une quelconque des revendications précédentes, **caractérisé en ce que** la couche de blocage (2) présente une épaisseur de 5 à 300 nm, de préférence de 5 à 50 nm.

9. Substrat transparent selon au moins l'une quelconque des revendications précédentes, **caractérisé en ce que** l'émissivité du système de revêtement est inférieure à εₙ ≤ 0,50.

10. Substrat transparent selon la revendication 9, **caractérisé en ce que** l'émissivité du système de revêtement est inférieure à εₙ ≤ 0,20.

11. Substrat transparent selon la revendication 10, **caractérisé en ce que** l'émissivité du système de revêtement est inférieure à εₙ ≤ 0,15.

12. Substrat transparent selon au moins l'une quelconque des revendications précédentes, **caractérisé en ce qu'**il présente une transmission de lumière d'au moins 60 %.

13. Substrat transparent selon la revendication 12, **caractérisé en ce qu'**il présente une transmission de lumière d'au moins 70 %.

14. Substrat transparent selon la revendication 13, **caractérisé en ce qu'**il présente une transmission de lumière d'au moins 80 %.

15. Substrat transparent selon au moins l'une quelconque des revendications précédentes, **caractérisé en ce que** le substrat (S) est constitué de verre ou d'une matière plastique transparente.

16. Substrat transparent selon au moins l'une quelconque des revendications précédentes, **caractérisé en ce qu'**il est appliqué entre le substrat (S) et la couche TCO (1) au moins une couche de barrière de diffusion contre le sodium, dont l'épaisseur est de 5 nm à 150 nm.

17. Substrat transparent selon la revendication 16, **caractérisé en ce que** la couche de barrière de diffusion-Na est constituée de SiOₓ ou de SiN_{y}, où 1,7<x<2,1 et 1,1<y<1,4.

18. Substrat transparent (4) selon au moins l'une quelconque des revendications précédentes en combinaison avec au moins un autre substrat transparent et au moins un écarteur disposé entre ceux-ci, dans lequel le système de revêtement se trouve vers l'extérieur.

19. Procédé pour la préparation d'un substrat avec un système de revêtement selon au moins l'une quelconque des revendications 1 à 18 par un procédé CVD, une pulvérisation cathodique et/ou un revêtement aux micro-ondes.

20. Procédé selon la revendication 19, **caractérisé en ce que** le procédé CVD est réalisé à l'aide d'un plasma.

21. Procédé selon au moins l'une quelconque des revendications 19 ou 20, **caractérisé en ce que** la au moins une des couches (1) ou (3) est appliquée sur un substrat chauffé (S), dont la température est lors du dépôt d'au moins 100°C et d'au plus 500°C, de préférence d'au moins 130°C et encore mieux d'au moins 170°C.

22. Procédé selon au moins l'une quelconque des revendications 20 ou 21, **caractérisé en ce que** le système de revêtement est soumis, après au moins une étape de dépôt des couches (1) à (3) à un traitement thermique, lequel est réalisé à de 200°C à 600°C et pendant de 3 minutes à 330 minutes, de préférence à de 250°C à 350°C pendant de 120 minutes à 270 minutes.

23. Procédé selon l'une quelconque des revendications 20 ou 21, **caractérisé en ce que** le système de revêtement est soumis, après au moins une étape de dépôt pour le dépôt des couches (1) à (3), à un traitement thermique, lequel est réalisé à de 600°C à 700°C et pendant de 2 minutes à 10 minutes, de préférence à de 620°C à 650°C pendant de 2 à 6 minutes.
